# EUROPÄISCHE PATENTANMELDUNG

(11) **EP 0 839 699 A1**
(43) Veröffentlichungstag der Anmeldung: **06.05.1998**
(21) Anmeldenummer: 97118145.8
(22) Anmeldetag: 20.10.1997
(51) Int. Cl.: B60R 25/10

(54) **Diebstahlüberwachungssystem**

(30) Priorität: 29.10.1996 DE 19644982
(71) Anmelder: SIEMENS AKTIENGESELLSCHAFT, 80333 München (DE)
(72) Erfinder: Kölpin, Thomas, Dr., 92224 Amberg (DE)

(57) **Zusammenfassung**

Zur Diebstahlüberwachung von in einem Parkhaus abgestellten Fahrzeugen werden Ultraschall-Näherungsschalter (1) verwendet, die zur Erfassung des Belegungszustandes von Stellplätzen als Teil eines Parkhausleitsystems installiert sind. Hierzu wird bei Belegung eines Stellplatzes in dem zugehörigen Ultraschall-Näherungsschalter (1) ein Parametriervorgang ausgelöst, durch den mittels Ultraschall-Abstandsmessung zu Oberflächenelementen des Fahrzeugs ein die Belegung kennzeichnendes Signal, z.B. ein Bezugsabstand, ermittelt und abgespeichert wird.

## Beschreibung

Die Erfindung betrifft ein Diebstahlüberwachungssystem mit einer zentralen Steuer- und Auswerteeinheit, mit mindestens einer Einrichtung zur Erfassung eines Fahrzeugs in einem Stellbereich und mit einem Alarm- oder Meldesystem, das durch die Steuer- und Auswerteeinheit ausgelöst wird, wenn mit Hilfe der Einrichtung die Entnahme des Fahrzeugs von dem Stellplatz erfaßt wird, ohne daß zuvor die Steuer- und Auswerteeinheit ein Freigabesignal erhalten hat.

Ein gattungsgemäßes Diebstahlüberwachungssystem ist aus der DE 41 13 097 C2 bekannt. Hier dient eine im Boden verlegte Induktionsschleife zur Erfassung eines Fahrzeugs in einem Stellbereich einer Tankstelle. Mit dem Diebstahlüberwachungssystem wird der Diebstahl von Benzin an Selbstbedienungstankstellen überwacht. Hierzu wird die Benzinentnahme an einer einem Stellbereich zugeordneten Zapfsäule erst freigegeben, nachdem in diesem Stellbereich ein Fahrzeug erfaßt wurde. Die Induktionsschleife spricht hier auf in Bodennähe befindliches Metall an und würde demzufolge ebenso ein Erfassungssignal liefern, wenn anstelle eines Fahrzeugs eine Metallplatte in Bodennähe gebracht würde. Die Induktionsschleife ist also ein nichtüberlistungssicheres Erfassungselement, was allerdings wegen der einfachen Überschaubarkeit eines Tankstellenbereichs für diese Anwendung ausreicht. Die Diebstahlüberwachung von Fahrzeugen in einem Parkhaus mit Hilfe von Induktionsschleifen ist wegen der mangelnden Überlistungssicherheit und des hohen Kostenaufwands ungeeignet.

Daher liegt der Erfindung die Aufgabe zugrunde, ein Diebstahlüberwachungssystem der obengenannten Art zu schaffen, mit dem auch eine einfache und sichere Diebstahlüberwachung von Fahrzeugen in einem Parkhaus möglich ist.

Die Aufgabe wird dadurch gelöst, daß als Einrichtung ein Ultraschall-Näherungsschalter dient, der einen Stellplatz in einem Parkhaus als Stellbereich überwacht, und daß bei Belegung eines Stellplatzes in dem zugehörigen Ultraschall-Näherungsschalter eine Parametrierung erfolgt, durch die mittels Ultraschall-Abstandsmessung zu Oberflächenelementen des Fahrzeugs die Ermittlung und Abspeicherung eines die Belegung durch das abgestellte Fahrzeug kennzeichnenden Signals ausgelöst wird, dessen Einhaltung im Bereich einstellbarer Toleranzgrenzen durch zyklische Abstandsmessung zumindest solange kontrolliert wird, bis die Steuer- und Auswerteeinheit das Freigabesignal erhält.

Eine vorteilhafte Weiterbildung der Erfindung besteht, wenn Haupt- und Nebenechos des bei der Ultraschall-Abstandsmessung empfangenen Ultraschall-Echosignals ausgewertet werden. Deren Amplituden und zeitliche Verteilung sind von der Form des Fahrzeugs abhängig. Bei entsprechender Auswertung ist bereits eine Manipulation am Fahrzeug erkennbar, die das Echosignal signifikant verändern würde. Somit ist es mit entsprechendem Aufwand möglich, mit den Ultraschall-Näherungsschaltern eine überlistungssichere Überwachung zu gewährleisten.

Eine besonders einfache Auswertung des Ultraschall-Echosignals besteht in der Ermittlung des Bezugabstands zum Fahrzeug.

Weitere vorteilhafte Ausgestaltung der Erfindung sind den Unteransprüchen 4 bis 7 zu entnehmen.

Ein Ausführungsbeispiel der Erfindung wird im folgenden anhand einer Zeichnung näher erläutert. Es zeigen:
- FIG 1: ein Prinzipschaltbild eines Diebstahlüberwachungssystems und
- FIG 2: einen mit einem Ultraschall-Näherungsschalter überwachten Stellplatz.

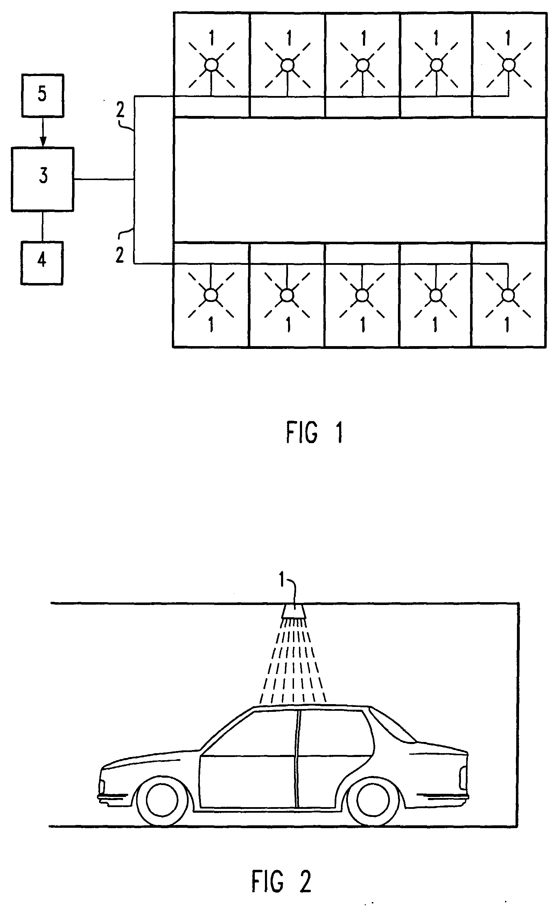

FIG 1 zeigt den prinzipiellen Aufbau eines Diebstahlüberwachungssystems in einem Parkhaus mit einer Vielzahl von Stellplätzen. Oberhalb der einzelnen Stellplätze ist jeweils ein Ultraschall-Näherungsschalter 1 mit der Detektionsrichtung Fußboden montiert. Die Ultraschall-Näherungsschalter 1 sind über ein Energie- und Signalbussystem 2, z.B. ein Aktuator-Sensor-Interface, als Leitung mit mindestens einer zentralen Steuer- und Auswerteeinheit 3 verbunden. Außerdem ist an die Steuer- und Auswerteeinheit 3 ein Alarm- oder Meldesystem 4 und eine Zähleinrichtung 5 angeschlossen.

Die Steuer- und Auswerteeinheit 3 steuert in bekannter Weise über Leuchtanzeigen den Verkehrsfluß im Parkhaus, nachdem mit Hilfe der Ultraschall-Näherungsschalter 1 der Belegungszustand der Stellplätze erfaßt wurde. Bei der Inbetriebnahme gibt die Steuer- und Auswerteeinheit 3 bei unbesetztem Parkhaus über das Energie- und Signalbussystem 2 einen Parametrierbefehl an die Ultraschall-Näherungsschalter 1, die daraufhin den jeweiligen Abstand zum Boden des Stellplatzes ermitteln und im individuellen Ultraschall-Näherungsschalter 1 als Bezugsabstand speichern. Wenn der Ultraschall-Näherungsschalter 1 das Bodenecho innerhalb eines vorgegebenen Toleranzbandes nicht mehr erkennt, wird dies als Belegung des Stellplatzes erkannt. Auf diese Weise wird der Belegungszustand unabhängig von der jeweiligen Fahrzeughöhe festgestellt.

Nach der vorliegenden Erfindung wird darüber hinaus nach Abstellen eines Fahrzeuges bei gewünschter Diebstahlüberwachung in dem betreffenden Ultraschall-Näherungsschalter 1 ein Parametriervorgang ausgelöst, der mittels Ultraschall-Abstandsmessung zu Oberflächenelementen des Fahrzeugs die Ermittlung und Abspeicherung eines die Belegung durch das abgestellte Fahrzeug kennzeichnenden Signals zur Folge hat. Dies kann im einfachsten Fall der Bezugsabstand des Fahrzeugs zum Ultraschall-Näherungsschalter 1 sein. Es ist aber auch möglich, daß im Ultraschall-Näherungsschalter 1 Haupt- und Nebenechos des bei der Ultraschallabstandsmessung empfangenen Ultraschall-Echosignals ausgewertet werden. Ändert sich im weiteren Verlauf der zyklisch gemessene aktuelle Abstand zum Fahrzeug gegenüber dem gespeicherten Bezugswert um mehr als ein vorgebbares Toleranzband, wird dies als unbefugte Manipulation am Fahrzeug erkannt. Es erfolgt dann eine entsprechende Meldung an die Steuer- und Auswerteeinheit 3 über einen im Antworttelegramm des Ultraschall-Näherungsschalters 1 enthaltenen Informationsteil, der sonst nur die Funktionsbereitschaft des Ultraschall-Näherungsschalters signalisiert. Durch Vorgabe eines genügend schmalen Toleranzbandes und die Verwendung der Funktionsbereitschaftsinformation ist die Anordnung in hohem Maße gegen Überlistung gesichert. Die befugte Entfernung eines Fahrzeugs wird dadurch erkannt, daß zuvor an der Zahleinrichtung 5 die Parkgebühr ordnungsgemäß entrichtet wurde. Die Zahleinrichtung 5 sendet daraufhin ein Freigabesignal an die Steuer- und Auswerteeinheit 3, woraufhin die Diebstahlüberwachung des betreffenden Ultraschall-Näherungsschaltes 1 beendet wird. Hierzu wird die ursprüngliche Parametrierung auf dem Abstand zum Boden des Stellplatzes reaktiviert. Darauf kann das Fahrzeug ohne Ansprechen des Alarms oder Meldesystems 4 entfernt und der Stellplatz in üblicher Weise neu besetzt werden.

Obwohl die vorliegende Erfindung unter Bezugnahme auf die in der beigefügten Zeichnung dargestellte Ausführungsform erläutert ist, sollte berücksichtigt werden, daß damit nicht beabsichtigt ist, die Erfindung nur auf die dargestellte Ausführungsform zu beschränken, sondern alle möglichen Änderungen, Modifizierungen und äquivalente Anordnungen, soweit sie vom Inhalt der Patentansprüche gedeckt sind, einzuschließen.

## Patentansprüche

1. Diebstahlüberwachungssystem mit einer zentralen Steuer- und Auswerteeinheit (3), mit mindestens einer Einrichtung (1) zur Erfassung eines Fahrzeugs in einem Stellbereich und mit einem Alarm- oder Meldesystem (4), das durch die Steuer- und Auswerteeinheit (3) ausgelöst wird, wenn mit Hilfe der Einrichtung (1) die Entnahme des Fahrzeugs von dem Stellplatz erfaßt wird, ohne daß zuvor die Steuer- und Auswerteeinheit (3) ein Freigabesignal erhalten hat, **dadurch gekennzeichnet,** daß als Einrichtung ein Ultraschall-Näherungsschalter (1) dient, der einen Stellplatz in einem Parkhaus als Stellbereich überwacht, und daß bei Belegung eines Stellplatzes in dem zugehörigen Ultraschall-Näherungsschalter (1) eine Parametrierung erfolgt, durch die mittels Ultraschall-Abstandsmessung zu Oberflächenelementen des Fahrzeugs die Ermittlung und Abspeicherung eines die Belegung durch das abgestellte Fahrzeug kennzeichnenden Signals ausgelöst wird, dessen Einhaltung im Bereich einstellbarer Toleranzgrenzen durch zyklische Abstandsmessung zumindest solange kontrolliert wird, bis die Steuer- und Auswerteeinheit (3) das Freigabesignal erhält.

2. Diebstahlüberwachungssystem nach Anspruch 1,
**dadurch gekennzeichnet,** daß Haupt- und Nebenechos des bei der Ultraschall-Abstandsmessung empfangenen Ultraschall-Echosignals ausgewertet werden.

3. Diebstahlüberwachungssystem nach Anspruch 1,
**dadurch gekennzeichnet,** daß als kennzeichnendes Signal der Bezugsabstand zum Fahrzeug ermittelt wird.

4. Diebstahlüberwachungssystem nach einem der vorangehenden Ansprüche, **dadurch gekennzeichnet,** daß die Steuer- und Auswerteeinheit (3) nach Empfang eines die Belegung eines Stellplatzes meldenden Belegungssignals einen Parametrierbefehl erzeugt und an den betreffenden Ultraschall-Näherungsschalter (1) weiterleitet.

5. Diebstahlüberwachungssystem nach einem der vorangehenden Ansprüche, **dadurch gekennzeichnet,** daß Lage und/oder Größe des Toleranzbereichs abhängig von der Belegungsdauer des Stellplatzes verändert wird.

6. Diebstahlüberwachungssystem nach einem der vorangehenden Ansprüche, **dadurch gekennzeichnet,** daß die Veränderung der durch zyklische Abstandsmessung innerhalb einer bestimmten Dauer gewonnenen Signale ausgewertet und davon abhängig bei nicht zuvor abgegebem Freigabesignal das Alarm- oder Meldesystem (4) ausgelöst wird.

7. Diebstahlüberwachungssystem nach einem der vorangehenden Ansprüche, **dadurch gekennzeichnet,** daß das Freigabesignal durch einen Bezahlvorgang ausgelöst wird.
